(19) Europäisches Patentamt
European Patent Office
Office européen des brevets

(11) EP 3 495 416 B1

(12) **EUROPEAN PATENT SPECIFICATION**

(45) Date of publication and mention of the grant of the patent:
**22.04.2020 Bulletin 2020/17**

(21) Application number: **18208877.3**

(22) Date of filing: **28.11.2018**

(51) Int Cl.:
***C08L 9/00*** *(2006.01)*
***B60C 1/00*** *(2006.01)*
***C08K 5/31*** *(2006.01)*
***C08K 5/44*** *(2006.01)*
***C08K 5/47*** *(2006.01)*
***C08L 9/06*** *(2006.01)*
***C08K 3/36*** *(2006.01)*
***C08K 5/548*** *(2006.01)*

(54) **RUBBER COMPOSITION FOR TIRE AND PNEUMATIC TIRE**
KAUTSCHUKZUSAMMENSETZUNG FÜR REIFEN UND LUFTREIFEN
COMPOSITION DE CAOUTCHOUC POUR PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2017 JP 2017236130**

(43) Date of publication of application:
**12.06.2019 Bulletin 2019/24**

(73) Proprietor: **SUMITOMO RUBBER INDUSTRIES, LTD.**
**Kobe-shi,**
**Hyogo-ken 651-0072 (JP)**

(72) Inventor: **MATSUI, Ryoji**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 733 171**
**EP-A1- 3 225 657**
**WO-A1-2014/068486**
**US-A1- 2011 294 936**
**US-A1- 2018 118 856**
**US-B2- 9 018 290**
**US-B2- 9 284 438**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 495 416 B1

## Description

BACKGROUND OF THE INVENTION

Field of the Invention

The present invention relates to a rubber composition for a tire and a pneumatic tire.

Description of the Background Art

To date, rolling resistance of a tire has been reduced (improvement of rolling resistance performance) to reduce fuel consumption of an automobile. In recent years, reduction of fuel consumption of an automobile has been increasingly required, and rubber composition for a tire is required to exhibit excellent low heat generation properties (good fuel economy performance).

As a method for satisfying low heat generation properties in rubber composition, a method for reducing a content of a reinforcing filler is known. However, this method has a problem that wear resistance is degraded.

Japanese Laid-Open Patent Publication No. 2012-52128 indicates that fuel economy performance can be improved by containing a polymer obtained by polymerization of a silane coupling agent. However, there is room for further improvement, and development of another technique is further required.

SUMMARY OF THE INVENTION

An object of the present invention is to provide a rubber composition that allows wear resistance and fuel economy performance to be improved in a well-balanced manner, and a pneumatic tire using the same.

The present invention is directed to a rubber composition, for a tire, which includes: a rubber component that contains a first styrene butadiene rubber having a weight-average molecular weight of not less than 1000000, a second styrene butadiene rubber having a weight-average molecular weight of not less than 100000 and not greater than 400000, and a butadiene rubber having a weight-average molecular weight of not less than 400000 and not greater than 1000000; a silica; a mercapto silane coupling agent; a sulfenamide-based vulcanization accelerator; a guanidine-based vulcanization accelerator; and a thiazole-based vulcanization accelerator.

The second styrene butadiene rubber preferably has a vinyl content of not less than 50% by mass.

The second styrene butadiene rubber preferably has a styrene content of not greater than 30% by mass

The butadiene rubber preferably has a cis content of not less than 95% by mass.

The mercapto silane coupling agent is preferably a silane coupling agent having a mercapto group and/or a silane coupling agent having a carbonylthio group.

The present invention is also directed to a pneumatic tire having a tire member produced by using the above-described rubber composition.

According to the present invention, a rubber composition for a tire includes: a rubber component that contains a first styrene butadiene rubber having a weight-average molecular weight of not less than 1000000, a second styrene butadiene rubber having a weight-average molecular weight of not less than 100000 and not greater than 400000, and a butadiene rubber having a weight-average molecular weight of not less than 400000 and not greater than 1000000; a silica; a mercapto silane coupling agent; a sulfenamide-based vulcanization accelerator; a guanidine-based vulcanization accelerator; and a thiazole-based vulcanization accelerator, so that wear resistance and fuel economy performance can be improved in a well-balanced manner.

DESCRIPTION OF THE PREFERRED EMBODIMENTS

A rubber composition, for a tire, according to the present invention includes:

a rubber component that contains a first styrene butadiene rubber (first SBR) having a weight-average molecular weight of not less than 1000000, a second styrene butadiene rubber (second SBR) having a weight-average molecular weight of not less than 100000 and not greater than 400000, and a butadiene rubber (BR) having a weight-average molecular weight of not less than 400000 and not greater than 1000000;
a silica;
a mercapto silane coupling agent;
a sulfenamide-based vulcanization accelerator;
a guanidine-based vulcanization accelerator; and
a thiazole-based vulcanization accelerator.

A reason why the rubber composition can allow wear resistance and fuel economy performance to be improved in a well-balanced manner is not necessarily clear. However, the following reasons can be assumed.

In order to improve wear resistance, high molecular weight SBR (first SBR) and high molecular weight BR are used. Also when the first SBR and the BR are each used alone, contribution to improvement of wear resistance is made. Moreover, when both the first SBR and the BR are used in combination, the first SBR and the BR form a sea-island structure, and, thus, even in a case where rubber cracks, the growth of the crack stops when the crack reaches the BR phase. Therefore, it is considered that further contribution to inhibition of fracture, that is, to improvement of wear resistance, is made.

Furthermore, when relatively low molecular weight SBR (second SBR) is blended in addition to the first SBR and the BR, dispersibility of a reinforcing filler such as silica in the SBR phase is improved. As a result, it is considered that reinforcing properties of the SBR phase are improved, and concentration of stress is alleviated, whereby further contribution to improvement of wear resistance is made. Furthermore, it is considered that improvement of dispersibility of a reinforcing filler such as silica and alleviation of concentration of stress allow fuel economy performance to be also improved.

Furthermore, it is considered that, when a mercapto silane coupling agent is blended, dispersibility of silica is improved, and concentration of stress is alleviated, whereby wear resistance and fuel economy performance are also improved. It is considered that a vulcanization time can be shortened by using three kinds of vulcanization accelerators, and over-vulcanization and vulcanization reversion can be inhibited by shortening a vulcanization time, whereby crosslink density and crosslinking points are made uniform over the entirety of rubber, and concentration of stress is alleviated, and further contribution to improvement of wear resistance is made. Furthermore, it is considered that alleviation of concentration of stress also improves fuel economy performance.

For the reasons described above, it is considered that alleviation of concentration of stress in a vulcanized rubber composition is synergistically promoted, and wear resistance and fuel economy performance are improved in a well-balanced manner as compared to a conventional art.

The rubber composition contains, as a rubber component, a first styrene butadiene rubber (first SBR) having a weight-average molecular weight of not less than 1000000, a second styrene butadiene rubber (second SBR) having a weight-average molecular weight of not less than 100000 and not greater than 400000, and butadiene rubber (BR) having a weight-average molecular weight of not less than 400000 and not greater than 1000000.

The first SBR is not particularly limited. Examples of the first SBR include emulsion-polymerized styrene butadiene rubber (E-SBR) and solution-polymerized styrene butadiene rubber (S-SBR). These may be each used alone, or two or more thereof may be used in combination.

The weight-average molecular weight (Mw) of the first SBR is not less than 1000000, preferably not less than 1200000, and more preferably not less than 1400000. The upper limit of the Mw is not particularly defined, but is preferably not greater than 2000000, more preferably not greater than 1800000, and even more preferably not greater than 1600000. When the Mw is within the above-described range, the effect tends to be advantageously obtained.

In the description herein, the weight-average molecular weight (Mw) of the rubber component can be obtained by polystyrene standard conversion based on a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

A styrene content of the first SBR is preferably not less than 25% by mass, more preferably not less than 30% by mass, and even more preferably not less than 35% by mass. The styrene content of the first SBR is preferably not greater than 50% by mass, more preferably not greater than 48% by mass, and even more preferably not greater than 45% by mass. When the styrene content of the first SBR is within the above-described range, the effect tends to be advantageously obtained.

In the description herein, the styrene content of the SBR is calculated by H'-NMR measurement.

A vinyl content of the first SBR is preferably not less than 5% by mass and more preferably not less than 10% by mass. The vinyl content of the first SBR is preferably not greater than 40% by mass, more preferably not greater than 35% by mass, even more preferably not greater than 30% by mass, and particularly preferably not greater than 20% by mass. When the vinyl content of the first SBR is within the above-described range, the effect tends to be advantageously obtained.

In the description herein, the vinyl content (1,2-bond butadiene unit content) can be measured by infrared absorption spectrometry.

The first SBR may be unmodified SBR or may be modified SBR. These may be each used alone, or two or more thereof may be used in combination.

The modified SBR may be a SBR having a functional group that interacts with a filler such as silica, and examples of the modified SBR include end-modified SBR (end-modified SBR having the above-described functional group at an end thereof) obtained by modifying at least one end of SBR with a compound (modifier) having the above-described functional group, main chain-modified SBR having the above-described functional group in the main chain thereof, main

chain/end-modified SBR (for example, main chain/end-modified SBR which has the above-described functional group in the main chain thereof and in which at least one end thereof is modified with the above-described modifier) having the above-described functional group in the main chain and at an end thereof, and end-modified SBR which is modified (coupled) by using a multifunctional compound having two or more epoxy groups in the molecule thereof and to which a hydroxyl group or an epoxy group is introduced. These may be each used alone, or two or more thereof may be used in combination.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have substituents. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable since the effect can be more advantageously obtained.

The second SBR is not particularly limited. Examples of the second SBR include emulsion-polymerized styrene butadiene rubber (E-SBR) and solution-polymerized styrene butadiene rubber (S-SBR). These may be each used alone, or two or more thereof may be used in combination.

The weight-average molecular weight (Mw) of the second SBR is not less than 100000, preferably not less than 120000, more preferably not less than 140000, even more preferably not less than 160000, particularly preferably not less than 200000, and most preferably not less than 250000. The Mw of the second SBR is not greater than 400000 and preferably not greater than 350000. When the Mw of the second SBR is within the above-described range, the effect tends to be advantageously obtained.

A styrene content of the second SBR is preferably not less than 10% by mass, more preferably not less than 12% by mass, and even more preferably not less than 15% by mass. The styrene content of the second SBR is preferably not greater than 35% by mass, more preferably not greater than 30% by mass, and even more preferably not greater than 25% by mass. When the styrene content of the second SBR is within the above-described range, the effect tends to be advantageously obtained. In particular, when the styrene content of the second SBR is not greater than 30% by mass (preferably not greater than 25% by mass), compatibility with the BR is enhanced, and concentration of stress is further alleviated, and the effect tends to be more advantageously obtained.

A vinyl content of the second SBR is preferably not less than 40% by mass, more preferably not less than 45% by mass, and even more preferably not less than 50% by mass. The vinyl content of the second SBR is preferably not greater than 70% by mass and more preferably not greater than 60% by mass. When the vinyl content of the second SBR is within the above-described range, the effect tends to be advantageously obtained. In particular, when the vinyl content of the second SBR is not less than 50% by mass, compatibility with the BR is enhanced, and concentration of stress is further alleviated, and the effect tends to be more advantageously obtained.

The second SBR may be unmodified SBR or may be modified SBR. These may be each used alone, or two or more thereof may be used in combination. Among them, the modified SBR is preferable.

Examples of the modified SBR include modified SBR to which the same functional group as described above for the modified SBR in the first SBR is introduced. Preferable examples of the functional group are the same as described above for the first SBR.

As the first SBR and the second SBR, for example, SBRs manufactured by and available from Sumitomo Chemical Company, Limited, JSR Corporation, Asahi Kasei Corporation, Zeon Corporation, Dow Chemical Company, etc., can be used.

The BR is not particularly limited. BRs that are generally used in the tire industry can be used. These may be each used alone, or two or more thereof may be used in combination.

The weight-average molecular weight (Mw) of the BR is not less than 400000, preferably not less than 450000, more preferably not less than 500000, even more preferably not less than 600000, and particularly preferably not less than 700000. The Mw of the BR is not greater than 1000000 and preferably not greater than 900000. When the Mw of the BR is within the above-described range, the effect tends to be advantageously obtained.

A cis content (proportion of cis-structure) of the BR is preferably not less than 20% by mass, more preferably not less than 30% by mass, even more preferably not less than 93% by mass, particularly preferably not less than 95% by mass, and most preferably not less than 97% by mass. The upper limit of the cis content is not particularly defined. When the cis content of the BR is within the above-described range, the effect tends to be advantageously obtained. In particular, when the cis content of the BR is not less than 95% by mass (preferably not less than 97% by mass), the effect tends to be more advantageously obtained.

A vinyl content (proportion of vinyl structure) of the BR is preferably not greater than 30% by mass, more preferably not greater than 20% by mass, even more preferably not greater than 2.0% by mass, and particularly preferably

not greater than 1.8% by mass. The lower limit of the vinyl content is not particularly defined. When the vinyl content of the BR is within the above-described range, the effect tends to be advantageously obtained.

A trans content (proportion of trans-structure) of the BR is preferably not greater than 60% by mass, more preferably not greater than 55% by mass, even more preferably not greater than 2.0% by mass, and particularly preferably not greater than 1.6% by mass. The lower limit of the trans content is not particularly defined. When the trans content of the BR is within the above-described range, the effect tends to be advantageously obtained.

In the description herein, the cis content, the vinyl content, and the trans content can be measured by infrared absorption spectrometry.

The BR is not particularly limited when the BR has the Mw of not less than 400000 and not greater than 1000000. Examples of the BR include BR having a high cis content, BR that contains syndiotactic polybutadiene crystals, butadiene rubber (rare earth BR) which is synthesized by using a rare earth element catalyst, and butadiene rubber (transition metal catalyst-based BR) which is synthesized by using a transition metal catalyst. These may be each used alone, or two or more thereof may be used in combination. Among them, transition metal catalyst-based BR is preferable.

The BR may be unmodified BR or may be modified BR. These may be each used alone, or two or more thereof may be used in combination.

Examples of the modified BR include modified BR to which the same functional group as in the modified SBR described above is introduced.

The transition metal catalyst-based BR is butadiene rubber which is synthesized by using a transition metal catalyst, and in which a cis content is high, and a vinyl content and trans content are low. As the transition metal catalyst-based BR, a general-purpose product in manufacturing a tire can be used.

The transition metal catalyst-based BR can be produced by using, for example, a catalyst system that contains a transition metal catalyst, organoaluminum compound, and water.

As the transition metal catalyst, cobalt catalyst is preferable. Examples of the cobalt catalyst include: cobalt salts such as cobalt chloride, cobalt bromide, cobalt nitrate, cobalt octylate (ethyl hexanoate), cobalt naphthenate, cobalt acetate, and cobalt malonate; cobalt bis-acetylacetonate, cobalt tris-acetylacetonate, acetoacetic acid ethyl ester cobalt, and organic base complexes or ethyl alcohol complexes of cobalt salts such as pyridine complexes and picoline complexes. Among them, cobalt octylate (ethyl hexanoate) is preferable.

The amount of the transition metal catalyst to be used can be adjusted as appropriate such that polybutadiene has a desired Mw.

Examples of the organoaluminum compound include: trialkylaluminums; halogen-containing organoaluminum compounds such as dialkylaluminum chlorides, dialkylaluminum bromides, alkylaluminum sesquichlorides, alkylaluminum sesquibromides, alkylaluminum dichlorides, and alkylaluminum dibromides; and hydrogenated organoaluminum compounds such as dialkylaluminum hydrides and alkylaluminum sesquihydrides. These organoaluminum compounds may be each used alone, or two or more thereof may be used in combination.

Specific examples of the trialkylaluminum include trimethylaluminum, triethylaluminum, triisobutylaluminum, trihexylaluminum, trioctylaluminum, and tridecylaluminum.

Examples of the dialkylaluminum chloride include dimethylaluminum chloride and diethylaluminum chloride. Examples of the dialkylaluminum bromide include dimethylaluminum bromide and diethylaluminum bromide. Examples of the alkylaluminum sesquichloride include methylaluminum sesquichloride and ethylaluminum sesquichloride. Examples of the alkylaluminum sesquibromide include methylaluminum sesquibromide and ethylaluminum sesquibromide. Examples of the alkylaluminum dichloride include methylaluminum dichloride and ethylaluminum dichloride. Examples of the alkylaluminum dibromide include methylaluminum dibromide and ethylaluminum dibromide.

Examples of the dialkylaluminum hydride include diethylaluminum hydride and diisobutylaluminum hydride. Examples of the alkylaluminum sesquihydride include ethylaluminum sesquihydride and isobutylaluminum sesquihydride.

As the mixture ratio of organoaluminum compound to water, aluminum/water (molar ratio) is preferably 1.5 to 3, and more preferably 1.7 to 2.5.

Furthermore, a molecular weight modifier can be used such that polybutadiene has a desired Mw. Examples of the molecular weight modifier include: non-conjugated dienes such as cyclooctadiene, allene, and methylallene (1,2-butadiene); and $\alpha$-olefins such as ethylene, propylene, and 1-butene. The molecular weight modifiers may be each used alone, or two or more thereof may be used in combination.

The polymerization method is not particularly limited, and, for example, a mass polymerization (bulk polymerization) for polymerizing a monomer by using a conjugated diene compound monomer such as 1,3-butadiene as a polymerization solvent, and a solution polymerization for performing polymerization by dissolving a monomer in a solvent can be applied. Examples of the solvent used for the solution polymerization include: aromatic hydrocarbons such as toluene, benzene, and xylene; saturated aliphatic hydrocarbons such as n-hexane, butane, heptane, and pentane; alicyclic hydrocarbons such as cyclopentane and cyclohexane; olefin hydrocarbons such as cis-2-butene and trans-2-butene; petroleum-based solvents such as mineral spirits, solvent naphtha, and kerosene; and halogenated hydrocarbons

such as methylene chloride. Among them, toluene, cyclohexane, or a mixed solvent of cis-2-butene and trans-2-butene is preferably used.

The polymerization temperature is preferably in a range of -30 to 150°C and more preferably in a range of 30 to 100°C. The polymerization temperature is even more preferably in a range of 70 to 80°C because a polybutadiene having a desired T80 is easily obtained. The polymerization time is preferably in a range of 1 minute to 12 hours and more preferably in a range of 5 minutes to 5 hours.

After a predetermined polymerization rate is reached in the polymerization reaction, an anti-aging agent can be added as appropriate. Examples of the anti-aging agent include: phenol-based anti-aging agents such as 2,6-di-t-butyl-p-cresol (BHT); phosphorus-based anti-aging agents such as trinonyl phenyl phosphite (TNP); and sulfur-based anti-aging agents such as 4,6-bis(octyl thiomethyl)-o-cresol and dilauryle-3,3'-thiodipropionate (TPL). The anti-aging agents may be each used alone, or two or more thereof may be used in combination. The amount of the anti-aging agent to be added is preferably 0.001 to 5 parts by mass with respect to 100 parts by mass of the polybutadiene.

After polymerization has been performed for a predetermined time, the pressure inside the polymerization tank is discharged as appropriate, and a postprocess such as washing or drying step is further performed, whereby transition metal catalyst-based BR having desired properties can be produced.

As the BR, for example, products of Ube Industries, Ltd., JSR Corporation, Asahi Kasei Corporation, Zeon Corporation, Lanxess, etc., can be used.

A content of the first SBR in 100% by mass of the rubber component is preferably not less than 5% by mass, more preferably not less than 10% by mass, and even more preferably not less than 15% by mass, and is preferably not greater than 50% by mass, more preferably not greater than 40% by mass, and even more preferably not greater than 35% by mass. When the content of the first SBR is within the above-described range, the effect tends to be advantageously obtained.

A content of the second SBR in 100% by mass of the rubber component is preferably not less than 15% by mass, more preferably not less than 25% by mass, even more preferably not less than 40% by mass, and particularly preferably not less than 50% by mass, and is preferably not greater than 90% by mass, more preferably not greater than 85% by mass, and even more preferably not greater than 75% by mass. When the content of the second SBR is within the above-described range, the effect tends to be advantageously obtained.

A content of the BR in 100% by mass of the rubber component is preferably not less than 5% by mass, more preferably not less than 10% by mass, and even more preferably not less than 15% by mass, and is preferably not greater than 40% by mass, more preferably not greater than 35% by mass, and even more preferably not greater than 30% by mass. When the content of the BR is within the above-described range, the effect tends to be advantageously obtained.

The total content of the first SBR, the second SBR, and the BR in 100% by mass of the rubber component is preferably not less than 60% by mass, more preferably not less than 80% by mass, even more preferably not less than 90% by mass, and may be 100% by mass. When the total content thereof is within the above-described range, the effect tends to be advantageously obtained.

Examples of a rubber component, which is usable for the rubber composition, other than the first SBR, the second SBR, and the BR include SBR other than the first SBR and the second SBR, BR other the above-described BR, isoprene-based rubber, and diene rubbers such as acrylonitrile-butadiene rubber (NBR), chloroprene rubber (CR), isobutylene-isoprene-rubber (IIR), and styrene-isoprene-butadiene copolymer rubber (SIBR). These may be each used alone, or two or more thereof may be used in combination.

Examples of the isoprene-based rubber include natural rubber (NR), isoprene rubber (IR), reformed NR, modified NR, and modified IR. As the NR, for example, NRs, such as SIR20, RSS#3, and TSR20, which are generally used in the tire industry, can be used. The IR is not particularly limited. As the IR, IR, such as IR2200, which is generally used in the tire industry, can be used. Examples of the reformed NR include deproteinized natural rubber (DPNR) and ultra pure natural rubber (UPNR). Examples of the modified NR include epoxidized natural rubber (ENR), hydrogenated natural rubber (HNR), and grafted natural rubber. Examples of the modified IR include epoxidized isoprene rubber, hydrogenated isoprene rubber, and grafted isoprene rubber. These may be each used alone, or two or more thereof may be used in combination. A content of the isoprene-based rubber in 100% by mass of the rubber component is not particularly limited when the effect is not reduced, and is preferably not less than 5% by mass and preferably not greater than 20% by mass.

The rubber composition includes, as three kinds of vulcanization accelerators, sulfenamide-based vulcanization accelerator, guanidine-based vulcanization accelerator, and thiazole-based vulcanization accelerator.

Examples of the sulfenamide-based vulcanization accelerator include N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), N-oxyethylene-2-benzothiazole sulfenamide, and N,N-diisopropyl-2-benzothiazole sulfenamide. Among them, CBS, TBBS, and DCBS are preferable, and CBS is more preferable.

Examples of the guanidine-based vulcanization accelerator include 1,3-diphenylguanidine, diorthotolylguanidine, and orthotolylbiguanidine. Among them, 1,3-diphenylguanidine is preferable.

Examples of the thiazole-based vulcanization accelerator include 2-mercaptobenzothiazole (MBT), dibenzothiazolyl disulfide (MBTS), sodium salt, zinc salt, copper salt, and cyclohexylamine salt of 2-mercaptobenzothiazole, 2-(2,4-dinitrophenyl)mercaptobenzothiazole, and 2-(2,6-diethyl-4-morpholinothio)benzothiazole. Among them, MBT, MBTS, and zinc salt of MBT are preferable, and MBT is more preferable.

A content of the sulfenamide-based vulcanization accelerator is preferably not less than 0.5 parts by mass, more preferably not less than 0.7 parts by mass, even more preferably not less than 1.0 part by mass, and particularly preferably not less than 1.5 parts by mass, per 100 parts by mass of the rubber component. The content thereof is preferably not greater than 10 parts by mass and more preferably not greater than 4.0 parts by mass. When the content thereof is within the above-described range, the effect tends to be advantageously obtained.

A content of the guanidine-based vulcanization accelerator is preferably not less than 0.5 parts by mass, more preferably not less than 0.7 parts by mass, even more preferably not less than 1.0 part by mass, and particularly preferably not less than 1.5 parts by mass, per 100 parts by mass of the rubber component. The content thereof is preferably not greater than 10 parts by mass, more preferably not greater than 4.0 parts by mass, and even more preferably not greater than 3.0 parts by mass. When the content thereof is within the above-described range, the effect tends to be advantageously obtained.

A content of the thiazole-based vulcanization accelerator is preferably not less than 0.1 parts by mass, more preferably not less than 0.2 parts by mass, and even more preferably not less than 0.3 parts by mass, per 100 parts by mass of the rubber component. The content thereof is preferably not greater than 5.0 parts by mass, more preferably not greater than 2.0 parts by mass, and even more preferably not greater than 1.0 part by mass. When the content thereof is within the above-described range, the effect tends to be advantageously obtained.

The total content of the sulfenamide-based vulcanization accelerator, the guanidine-based vulcanization accelerator, and the thiazole-based vulcanization accelerator is preferably not less than 1.0 part by mass, more preferably not less than 2.0 parts by mass, even more preferably not less than 3.0 parts by mass, and particularly preferably not less than 4.0 parts by mass, per 100 parts by mass of the rubber component. The total content thereof is preferably not greater than 15 parts by mass, more preferably not greater than 10 parts by mass, and even more preferably not greater than 7.0 parts by mass. When the total content thereof is within the above-described range, the effect tends to be advantageously obtained.

In the rubber composition, a vulcanization accelerator other than the sulfenamide-based vulcanization accelerator, the guanidine-based vulcanization accelerator, and the thiazole-based vulcanization accelerator may be blended.

Examples of the vulcanization accelerator other than the sulfenamide-based vulcanization accelerator, the guanidine-based vulcanization accelerator, and the thiazole-based vulcanization accelerator include thiuram-based vulcanization accelerators such as tetramethylthiuram disulfide (TMTD), tetrabenzylthiuram disulfide (TBzTD), and tetrakis (2-ethylhexyl)thiuram disulfide (TOT-N). These may be each used alone, or two or more thereof may be used in combination.

The rubber composition contains silica. Thus, the effect can be advantageously obtained.

Examples of the silica include dry-process silica (silicic anhydride) and wet-process silica (hydrous silicic acid). Wet-process silica is preferable since it has a higher silanol group content. These may be each used alone, or two or more thereof may be used in combination.

A nitrogen adsorption specific surface area ($N_2SA$) of the silica is preferably not less than 70 $m^2/g$ and more preferably not less than 150 $m^2/g$. When the $N_2SA$ of the silica is not less than 70 $m^2/g$, wear resistance tends to be improved. The $N_2SA$ of the silica is preferably not greater than 300 $m^2/g$ and more preferably not greater than 200 $m^2/g$. When the $N_2SA$ of the silica is not greater than 300 $m^2/g$, processability and fuel economy performance tend to be improved.

The nitrogen adsorption specific surface area of the silica is a value measured in the BET method in compliance with ASTM D3037-81.

As the silica, for example, products of Degussa, Rhodia, TOSOH SILICA CORPORATION, Solvay Japan, Ltd., Tokuyama Corporation, etc., can be used.

A content of the silica is preferably not less than 2 parts by mass, more preferably not less than 5 parts by mass, more preferably not less than 10 parts by mass, particularly preferably not less than 30 parts by mass, and most preferably not less than 50 parts by mass, per 100 parts by mass of the rubber component. When the content of the silica is not less than 2 parts by mass, wear resistance and fuel economy performance tend to be improved. The content of the silica is preferably not greater than 150 parts by mass, more preferably not greater than 130 parts by mass, even more preferably not greater than 100 parts by mass, and particularly preferably not greater than 80 parts by mass. When the content of the silica is not greater than 150 parts by mass, silica can be preferably dispersed, and good fuel economy performance and good wear resistance tend to be obtained.

The rubber composition contains mercapto silane coupling agent. Thus, the effect can be advantageously obtained.

The mercapto silane coupling agent is not particularly limited. Examples of the mercapto silane coupling agent include 3-mercaptopropyltrimethoxysilane, 2-mercaptoethyltriethoxysilane, and NXT and NXT-Z manufactured by Momentive.

In the description herein, the mercapto silane coupling agent is not limited to a silane coupling agent having a mercapto group (-SH), and may be a silane coupling agent that contains a derivative group (for example, carbonylthio group (-S-C (=O)-)) of a mercapto group. The derivative group of a mercapto group is not limited to a group that is derived directly from a mercapto group (-SH) through synthesis reaction, and may include a group having a structure obtained by a hydrogen atom of a mercapto group (-SH) being substituted with another atom or a group of atoms.

As the mercapto silane coupling agent, a silane coupling agent having a mercapto group (-SH) and a silane coupling agent having a carbonylthio group (-S-C(=O)-) are preferable, a silane coupling agent having a carbonylthio group (-S-C(=O)-) is more preferable, and a silane coupling agent represented by chemical formula (1) is even more preferable. Thus, the effect can be more advantageously obtained.

[Chemical Formula]

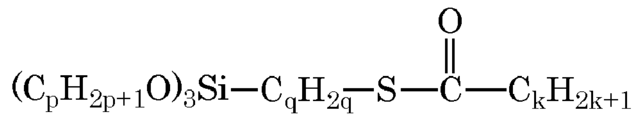 (1)

(wherein p represents an integer of 1 to 3, q represents an integer of 1 to 5, and k represents an integer of 5 to 12.)

In chemical formula (1), although p is an integer of 1 to 3, p is preferably 2. When p is not greater than 3, coupling reaction tends to be accelerated.

Although q is an integer of 1 to 5, q is preferably 2 to 4, and more preferably 3. When q is an integer of 1 to 5, synthesis tends to be facilitated.

Although k is an integer of 5 to 12, k is preferably 5 to 10, more preferably 6 to 8, and even more preferably 7.

Examples of the silane coupling agent which has a carbonylthio group (-S-C(=O)-) and the silane coupling agent represented by chemical formula (1) include 3-octanoylthio-1-propyltriethoxysilane, 3-octanoylthio-1-ethyltriethoxysilane, 3-octanoylthio-1-propyltrimethoxysilane, 3-heptanoylthio-1-propyltriethoxysilane, 3-heptanoylthio-1-ethyltriethoxysilane, 3-heptanoylthio-1-propyltrimethoxysilane, 3-hexanoylthio-1-propyltriethoxysilane, 3-hexanoylthio-1-ethyltriethoxysilane, 3-hexanoylthio-1-propyltrimethoxysilane, 3-undecanoylthio-1-propyltriethoxysilane, 3-undecanoylthio-1-ethyltriethoxysilane, and 3-undecanoylthio-1-propyltrimethoxysilane.

As the mercapto silane coupling agent, for example, products of Degussa, Momentive, Shin-Etsu Silicone, Tokyo Chemical Industry Co., Ltd., AZmax, Dow Corning Toray Co., Ltd., etc., can be used.

A content of the mercapto silane coupling agent is preferably not less than 3 parts by mass and more preferably not less than 5 parts by mass, per 100 parts by mass of silica. When the content thereof is not less than 3 parts by mass, the effect due to the blending thereof tends to be obtained. The content thereof is preferably not greater than 20 parts by mass and more preferably not greater than 15 parts by mass. When the content thereof is not greater than 20 parts by mass, the effect corresponding to a blended amount can be obtained, and good processability in kneading tends to be obtained.

The rubber composition may contain, in addition to the mercapto silane coupling agent, a silane coupling agent other than the mercapto silane coupling agent.

The silane coupling agent other than the mercapto silane coupling agent is not particularly limited, and examples of the silane coupling agent other than the mercapto silane coupling agent include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be each used alone, or two or more thereof may be used in combination.

As the silane coupling agent other than the mercapto silane coupling agent, for example, products of Degussa, Momentive, Shin-Etsu Silicone, Tokyo Chemical Industry Co., Ltd., AZmax, Dow Corning Toray Co., Ltd., etc., can be used.

When the rubber composition contains, in addition to the mercapto silane coupling agent, the silane coupling agent other than the mercapto silane coupling agent, the total content of the silane coupling agents may be the same as the above-described content of the mercapto silane coupling agent which is used alone.

The rubber composition may contain, in addition to the silica, a reinforcing filler other than the silica. Thus, the effect can be more advantageously obtained.

The reinforcing filler other than the silica is not particularly limited. Examples of the reinforcing filler include carbon black, calcium carbonate, talc, alumina, clay, aluminum hydroxide, and aluminum oxide. In addition thereto, a filler in which one particle has a width or thickness of not greater than 50 nm can be preferably used, and a plate-like filler such as graphene and mica, an inorganic mineral such as montmorillonite and sepiolite, and an organic fiber such as pulp and microfibrillated plant fiber can be used. Among them, carbon black is preferable since the effect can be more advantageously obtained.

The carbon black is not particularly limited. Examples of the carbon black include N134, N110, N220, N234, N219, N339, N330, N326, N351, N550, and N762. These may be each used alone, or two or more thereof may be used in combination.

A nitrogen adsorption specific surface area ($N_2SA$) of the carbon black is preferably not less than 70 $m^2$/g, more preferably not less than 80 $m^2$/g, and even more preferably not less than 100 $m^2$/g. When the $N_2SA$ of the carbon black is not less than 70 $m^2$/g, reinforcing properties are improved, and wear resistance tends to be sufficient. The $N_2SA$ of the carbon black is preferably not greater than 300 $m^2$/g, more preferably not greater than 250 $m^2$/g, even more preferably not greater than 200 $m^2$/g, and particularly preferably not greater than 150 $m^2$/g. When the $N_2SA$ of the carbon black is not greater than 300 $m^2$/g, the carbon black can be preferably dispersed, and the effect tends to be advantageously obtained.

The nitrogen adsorption specific surface area of the carbon black is obtained according to JIS K 6217-2:2001.

As the carbon black, for example, products of Asahi Carbon Co., Ltd., Cabot Japan K.K., TOKAI CARBON CO., LTD., Mitsubishi Chemical Corporation, Lion Corporation, NIPPON STEEL Carbon Co., Ltd, Columbia Carbon Co., etc., can be used.

A content of the carbon black is preferably not less than 2 parts by mass and more preferably not less than 3 parts by mass, per 100 parts by mass of the rubber component. When the content of the carbon black is not less than 2 parts by mass, resistance to UV-induced cracking and reinforcing properties can be made sufficient, and wear resistance tends to be good. The content of the carbon black is preferably not greater than 100 parts by mass, more preferably not greater than 60 parts by mass, even more preferably not greater than 30 parts by mass, and particularly preferably not greater than 20 parts by mass. When the content of the carbon black is not greater than 100 parts by mass, the carbon black can be preferably dispersed, and wear resistance and fuel economy performance tend to be good.

A content of the reinforcing filler (total content of the silica and the reinforcing fillers other than the silica) is preferably not less than 10 parts by mass, more preferably not less than 20 parts by mass, even more preferably not less than 40 parts by mass, and particularly preferably not less than 50 parts by mass, per 100 parts by mass of the rubber component. The content of the reinforcing filler is preferably not greater than 200 parts by mass, more preferably not greater than 150 parts by mass, even more preferably not greater than 120 parts by mass, and particularly preferably not greater than 80 parts by mass. When the content of the reinforcing filler is within the above-described range, the effect tends to be advantageously obtained.

The rubber composition preferably contains sulfur and/or a sulfur-containing compound. Thus, the effect can be advantageously obtained.

As the sulfur, sulfur which is generally used in the rubber industry can be used. Examples of the sulfur include powdery sulfur, precipitated sulfur, colloidal sulfur, insoluble sulfur, highly dispersible sulfur, and soluble sulfur. These may be each used alone, or two or more thereof may be used in combination.

As the sulfur, for example, products of Tsurumi Chemical Industry Co., Ltd., Karuizawa Sulfur Co, Ltd., SHIKOKU CHEMICALS CORPORATION, Flexsys, NIPPON KANRYU INDUSTRY CO., LTD., Hosoi Chemical Industry Co., Ltd., etc., can be used.

The sulfur-containing compound is not particularly limited when the sulfur-containing compound is a compound that contains sulfur and can be used as a vulcanizing agent. Examples of the sulfur-containing compound include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, 1,10-bis(N,N'-dibenzylthiocarbamoyldithio)decane, poly-3,6-dioxaoctane-tetrasulfide, and 1,6-hexamethylene sodium dithiosulfate dihydrate. These may be each used alone, or two or more thereof may be used in combination.

As the sulfur-containing compound, for example, products of LANXESS, Kawaguchi Chemical Industry Co., Ltd., etc., can be used.

The total content (preferably, the content of sulfur) of the sulfur and the sulfur-containing compound is preferably

not less than 0.1 parts by mass and more preferably not less than 0.5 parts by mass, per 100 parts by mass of the rubber component. The total content thereof is preferably not greater than 10 parts by mass, more preferably not greater than 5.0 parts by mass, and even more preferably not greater than 3.0 parts by mass. When the total content thereof is within the above-described range, the effect tends to be advantageously obtained.

The rubber composition preferably contains oil. Thus, the effect can be advantageously obtained.

Examples of the oil include process oils, vegetable fats and oils, and mixtures thereof. Examples of process oil include paraffinic process oils, aromatic process oils, and naphthenic process oils. Examples of vegetable fats and oils include rice oil, castor oil, cottonseed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., SANKYO YUKA KOGYO K.K., JXTG Nippon Oil & Energy Corporation, Olisoy, H&R, Hokoku Corporation, SHOWA SHELL SEKIYU K.K., FUJI KOSAN COMPANY, LTD., etc., can be used. These may be each used alone, or two or more thereof may be used in combination. Among them, aromatic process oil is preferable. It is considered that aromatic process oil is easily compatible with SBR, and, therefore, when aromatic process oil is blended, hardness of the SBR phase in which the reinforcing filler such as silica is distributed, can be inhibited from increasing, and concentration of stress in the SBR phase is alleviated, whereby contribution to improvement of wear resistance is made. Alleviation of concentration of stress also improves fuel economy performance.

A content of the oil is preferably not less than 3 parts by mass, more preferably not less than 5 parts by mass, even more preferably not less than 10 parts by mass, and particularly preferably not less than 15 parts by mass, per 100 parts by mass of the rubber component. The content of the oil is preferably not greater than 50 parts by mass, more preferably not greater than 40 parts by mass, and even more preferably not greater than 30 parts by mass. When the content of the oil is within the above-described range, the effect tends to be advantageously obtained.

The rubber composition may contain resin. The resin is not particularly limited when the resin is resin which is generally used in the tire industry. Examples of the resin include rosin-based resins, coumarone-indene resins, α-methylstyrene-based resins, terpene-based resin, p-t-butylphenol acetylene resin, acrylic resins, C5 reins, and C9 resins. As commercially available products, products of Maruzen Petrochemical Co., Ltd., Sumitomo Bakelite Co., Ltd., YASUHARA CHEMICAL CO., LTD., Tosoh Corporation., Rutgers Chemicals, BASF, Arizona Chemical Company, NITTO CHEMICAL CO., LTD., NIPPON SHOKUBAI CO., LTD., JXTG Nippon Oil & Energy Corporation, ARAKAWA CHEMICAL INDUSTRIES, LTD., TAOKA CHEMICAL COMPANY, LIMITED, TOAGOSEI CO., LTD., etc., can be used. These may be each used alone, or two or more thereof may be used in combination.

A content of the resin is preferably not less than 0.3 parts by mass and more preferably not less than 0.5 parts by mass, and is preferably not greater than 100 parts by mass and more preferably not greater than 50 parts by mass, per 100 parts by mass of the rubber component, in view of balance in performance.

The rubber composition preferably contains an anti-aging agent.

Examples of the anti-aging agent include naphthylamine anti-aging agents such as phenyl-α-naphthylamine; diphenylamine anti-aging agents such as octylated diphenylamine and 4,4'-bis(α,α'-dimethylbenzyl)diphenylamine; p-phenylenediamine anti-aging agents such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agents such as a polymer of 2,2,4-trimethyl-1,2-dihydroquinoline; monophenol anti-aging agents such as 2,6-di-t-butyl-4-methylphenol and styrenated phenol; and bis-, tris-, and poly-phenol anti-aging agents such as tetrakis-[methylene-3-(3',5'-di-t-butyl-4'-hydroxyphenyl)propionate]methane. These may be each used alone, or two or more thereof may be used in combination. Among them, the p-phenylenediamine anti-aging agent and the quinoline-based anti-aging agent are preferable.

As the anti-aging agent, for example, products of Seiko Chemical Co., Ltd., Sumitomo Chemical Company, Limited, OUCHI SHINKO CHEMICAL INDUSTRIAL CO., LTD., Flexsys, etc., can be used.

A content of the anti-aging agent is preferably not less than 0.5 parts by mass and more preferably not less than 1 part by mass, per 100 parts by mass of the rubber component. The content of the anti-aging agent is preferably not greater than 10 parts by mass and more preferably not greater than 5 parts by mass. When the content of the anti-aging agent is within the above-described range, the effect can be more advantageously obtained.

The rubber composition may contain wax.

The wax is not particularly limited. Examples of the wax include: petroleum wax such as paraffin wax and microcrystalline wax; natural wax such as vegetable wax and animal wax; and synthetic wax such as polymers of ethylene, propylene, etc. These may be each used alone, or two or more thereof may be used in combination. Among them, petroleum wax is preferable and paraffin wax is more preferable.

As the wax, for example, products of OUCHI SHINKO CHEMICAL INDUSTRIAL CO., LTD., NIPPON SEIRO CO., LTD., Seiko Chemical Co., Ltd., etc., can be used.

A content of the wax is preferably not less than 0.3 parts by mass and more preferably not less than 0.5 parts by mass, and is preferably not greater than 20 parts by mass and more preferably not greater than 10 parts by mass, per 100 parts by mass of the rubber component, in view of balance in performance.

The rubber composition preferably contains fatty acid.

As the fatty acid, conventionally known fatty acid can be used. Examples of the fatty acid include stearic acid, oleic acid, and palmitic acid. Stearic acid is preferable since the effect tends to be advantageously obtained.

As the fatty acid, products of Nichiyu, NOF, Kao Corporation, FUJIFILM Wako Pure Chemical Corporation, New Japan Chemical Co., Ltd., etc., can be used.

A content of the fatty acid is preferably not less than 0.5 parts by mass and more preferably not less than 1 part by mass, per 100 parts by mass of the rubber component. The content of the fatty acid is preferably not greater than 10 parts by mass and more preferably not greater than 5 parts by mass. When the content of the fatty acid is within the above-described range, the effect tends to be advantageously obtained.

The rubber composition preferably contains zinc oxide.

As the zinc oxide, conventionally known zinc oxide can be used. For example, products of MITSUI MINING & SMELTING CO., LTD., Toho Zinc Co., Ltd., HakusuiTech Co., Ltd., SEIDO CHEMICAL INDUSTRY CO., LTD., Sakai Chemical Industry Co., Ltd., etc., can be used.

A content of the zinc oxide is preferably not less than 0.5 parts by mass and more preferably not less than 1 part by mass, per 100 parts by mass of the rubber component. The content of the zinc oxide is preferably not greater than 10 parts by mass and more preferably not greater than 5 parts by mass. When the content of the zinc oxide is within the above-described numerical value range, the effect tends to be more advantageously obtained.

The rubber composition can contain an additive that is generally used in the tire industry in addition to the above-described components. Examples of the additive include fillers such as organic peroxide and magnesium sulfate. A content of each filler is preferably not less than 0.1 parts by mass and preferably not greater than 200 parts by mass, per 100 parts by mass of the rubber component.

The rubber composition can be produced by, for example, a method in which the above-described components are kneaded using a rubber kneading device such as an open roll and a Banbury mixer, and vulcanization is thereafter performed.

The kneading condition is such that, in a base kneading step of kneading additives other than the crosslinking agent (vulcanizing agent) and the vulcanization accelerator, the kneading temperature is generally 100 to 180°C and preferably 120 to 170°C. In a finish kneading step of kneading the vulcanizing agent and the vulcanization accelerator, the kneading temperature is generally not higher than 120°C and preferably 85 to 110°C. A composition obtained by kneading the vulcanizing agent and the vulcanization accelerator is subjected to vulcanization such as press vulcanization in general. The vulcanization temperature is generally 140 to 190°C and preferably 150 to 185°C.

In general, the vulcanization accelerator is kneaded in the finish kneading step. However, the vulcanization accelerator (sulfenamide-based vulcanization accelerator, guanidine-based vulcanization accelerator, and thiazole-based vulcanization accelerator) is preferably kneaded in the base kneading step. Thus, the effect can be more advantageously obtained. This is because it is considered that, when the vulcanization accelerator (sulfenamide-based vulcanization accelerator, guanidine-based vulcanization accelerator, and thiazole-based vulcanization accelerator) is kneaded in the base kneading step, the crosslinking points are more advantageously uniformalized, and concentration of stress is alleviated, and further contribution to improvement of wear resistance is made. It can be also considered that alleviation of concentration of stress also improves fuel economy performance.

The rubber composition is preferably used for treads (cap treads) and clinches that are required to have good wear resistance. Furthermore, since the rubber composition has good fuel economy performance, the rubber composition may be used for tire members, other than treads and clinches, such as sidewalls, base treads, under treads, bead apexes, breaker cushion rubber, carcass-cord-covering rubber, insulation, chafers, and inner liners, and side reinforcing layers for run-flat tires.

The clinch is a rubber portion, below a sidewall, which covers a portion that is in contact with a rim, and is also referred to as clinch apex or rubber chafer. Specifically, for example, the clinch is a member shown in FIG. 1 or the like in Japanese Laid-Open Patent Publication No. 2008-75066.

(Pneumatic tire)

A pneumatic tire of the present invention is produced using the above-described rubber composition in a standard method. That is, the rubber composition in which the above-described components are blended is extruded and processed in an unvulcanized state so as to correspond to a shape of each tire member such as a tread, and shaped together with other tire members in a tire forming machine in a standard method, thereby forming an unvulcanized tire. The unvulcanized tire is heated and pressurized in a vulcanizer, to obtain a tire.

The pneumatic tire can be preferably used as tires for passenger cars, tires for large passenger cars and large SUVs, tires for trucks and buses, tires for racing, studless tires (winter tires), tires for two-wheeled vehicles, run-flat tires, aircraft tires, tires for mines, and the like.

[Examples]

The present invention will be specifically described based on examples. However, the present invention is not limited to examples only.

(Production example 1-1)

n-hexane, styrene (manufactured by KANTO CHEMICAL CO., INC.), 1,3-butadiene, and tetramethylethylenediamine were added in a 30L pressure resistant vessel having been sufficiently purged with nitrogen, and a temperature was increased to 40°C. Subsequently, 1.6 M of butyllithium (manufactured by KANTO CHEMICAL CO., INC.) was added thereto, a temperature was thereafter increased to 50°C, and the mixture was agitated for three hours. Methanol and 2,6-tert-butyl-p-cresol were added to a reaction solution and the mixture was thereafter agitated for 10 minutes. Thereafter, aggregates were collected from polymer solution by steam stripping. The obtained aggregates were depressurized and dried for 24 hours, to obtain SBR (1-2).

(Production example 1-2) to (Production example 1-4)

An amount of the material to be loaded was changed from that in production example 1-1, to obtain each of SBR (1-3) to SBR (1-5).

(Production example 2-1)

Cyclohexane, tetrahydrofuran, styrene, and 1,3-butadiene were loaded into an autoclave reactor having been purged with nitrogen. The temperature of the content in the reactor was adjusted to 20°C. Thereafter, n-butyllithium was added thereto, to initiate polymerization. The polymerization was performed in a thermally insulated state. The maximum temperature reached 85°C. When a polymerization conversion rate reached 99%, butadiene was added, and polymerization was further performed for five minutes. Thereafter, 3-dimethylaminopropyl trimethoxysilane was added as a modifier, to perform reaction for 15 minutes. After the polymerization was ended, 2,6-di-tert-butyl-p-cresol was added. Subsequently, a solvent was removed by steam stripping, and drying by a heat roll adjusted to the temperature of 110°C was performed, to obtain modified styrene butadiene rubber (SBR (2-1)).

(Production example 2-2) to (Production example 2-6)

An amount of the material to be loaded was changed from that in production example 2-1, to obtain each of SBR (2-2) to SBR (2-6).

(Production example 3-1)

1.0 L of polymerization solution (1,3-butadiene (BD): 34.2% by mass, cyclohexane (CH): 31.2% by mass, the rest was 2-butene and the like) was loaded into a 1.5 L stainless-steel reactor, equipped with an agitator, which was purged with nitrogen gas. Furthermore, 1.52 mmol of water ($H_2O$), 2.08 mmol of diethylaluminum chloride (DEAC), 0.52 mmol of triethylaluminum (aluminum/water=1.71 (mixture molar ratio)), 20.94 μmol of cobalt octoate (Cocat), and 6.05 mmol of cyclooctadiene(COD) were added, and the mixture was agitated at 70°C for 20 minutes to perform 1,4-cis-polymerization. Thereafter, ethanol containing 4,6-bis(octyl thiomethyl)-o-cresol was added to stop polymerization. Unreacted butadiene and 2-butene and the like were evaporated and removed to obtain polybutadiene (BR (1)).

(Production example 3-2) to (Production example 3-4)

An amount of the material to be loaded was changed from that in production example 3-1, to obtain each of BR (2) to BR (4).

(Production example 3-5)

Butadiene rubber was synthesized in the same manner as for production example 3-1 except that, after polymerization in production example 3-1, 3-dimethylaminopropyl trimethoxysilane was added as a modifier, to perform reaction for 15 minutes in production example 3-5, thereby obtaining BR (5).

The SBR and the BR obtained in the above-described production examples were evaluated as follows.

(Weight-average molecular weight (Mw))

The Mw was obtained by polystyrene standard conversion based on a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

(Styrene content)

The styrene content of the SBR was calculated by H'-NMR measurement.

(Cis content, vinyl content, trans content)

The cis content, vinyl content, and trans content were measured by infrared absorption spectrometry.
Various chemicals used in examples and comparative examples are collectively described.

NR: TSR20
SBR (1-1): SLR6430 (non-oil-extended unmodified S-SBR, styrene content: 40% by mass, vinyl content: 14% by mass, Mw: 1200000) manufactured by Dow Chemical Company SBR (1-2): SBR (non-oil-extended unmodified S-SBR, styrene content: 40% by mass, vinyl content: 14% by mass, Mw: 1500000) synthesized in production example 1-1 described above SBR (1-3): SBR (non-oil-extended unmodified S-SBR, styrene content: 40% by mass, vinyl content: 14% by mass, Mw: 800000) synthesized in production example 1-2 described above SBR (1-4): SBR (non-oil-extended unmodified S-SBR, styrene content: 30% by mass, vinyl content: 14% by mass, Mw: 1200000) synthesized in production example 1-3 described above SBR (1-5): SBR (non-oil-extended unmodified S-SBR, styrene content: 40% by mass, vinyl content: 25% by mass, Mw: 1200000) synthesized in production example 1-4 described above SBR (2-1): SBR (non-oil-extended modified S-SBR, styrene content: 21% by mass, vinyl content: 55% by mass, Mw: 350000) synthesized in production example 2-1 described above SBR (2-2): SBR (non-oil-extended modified S-SBR, styrene content: 21% by mass, vinyl content: 55% by mass, Mw: 80000) synthesized in production example 2-2 described above SBR (2-3): SBR (non-oil-extended modified S-SBR, styrene content: 21% by mass, vinyl content: 55% by mass, Mw: 150000) synthesized in production example 2-3 described above SBR (2-4): SBR (non-oil-extended modified S-SBR, styrene content: 21% by mass, vinyl content: 55% by mass, Mw: 450000) synthesized in production example 2-4 described above SBR (2-5): SBR (non-oil-extended modified S-SBR, styrene content: 21% by mass, vinyl content: 40% by mass, Mw: 350000) synthesized in production example 2-5 described above SBR (2-6): SBR (non-oil-extended modified S-SBR, styrene content: 35% by mass, vinyl content: 55% by mass, Mw: 350000) synthesized in production example 2-6 described above BR (1): BR (non-oil-extended unmodified BR, cis content: 97.6% by mass, vinyl content: 1.4% by mass, trans content: 1.3% by mass, Mw: 530000) synthesized in production example 3-1 described above
BR (2): BR (non-oil-extended unmodified BR, cis content: 97.6% by mass, vinyl content: 1.4% by mass, trans content: 1.3% by mass, Mw: 300000) synthesized in production example 3-2 described above
BR (3): BR (non-oil-extended unmodified BR, cis content: 97.6% by mass, vinyl content: 1.4% by mass, trans content: 1.3% by mass, Mw: 900000) synthesized in production example 3-3 described above
BR (4): BR (non-oil-extended unmodified BR, cis content: 97.6% by mass, vinyl content: 1.4% by mass, trans content: 1.3% by mass, Mw: 1200000) synthesized in production example 3-4 described above
BR (5): BR (non-oil-extended modified BR, cis content: 97.6% by mass, vinyl content: 1.4% by mass, trans content: 1.3% by mass, Mw: 530000) synthesized in production example 3-5 described above
Carbon black: SHOBLACK N220 ($N_2SA$: 114 $m^2/g$) manufactured by Cabot Japan K.K.
Silica: ULTRASIL VN3 ($N_2SA$: 175 $m^2/g$) manufactured by DEGUSSA
Stearic acid: "Tsubaki" manufactured by NOF CORPORATION
Wax: OZOACE 0355 manufactured by NIPPON SEIRO CO., LTD.
Oil: Process X-140 (aromatic process oil) manufactured by JXTG Nippon Oil & Energy Corporation
Silane coupling agent (1): 3-octanoylthio-1-propyltriethoxysilane
Silane coupling agent (2): Si69 (bis(3-triethoxysilylpropyl)tetrasulfide) manufactured by DEGUSSA
Zinc oxide: Two types of zinc oxides manufactured by MITSUI MINING & SMELTING CO., LTD.
Anti-aging agent (1): ANTIGENE 6C (anti-aging agent, N-(1,3-dimethylbutyl)-N'-phenyl-p-phenylenediamine) manufactured by Sumitomo Chemical Company, Limited
Anti-aging agent (2): NOCRAC 224 (2,2,4-trimethyl-1,2-dihydroquinoline polymer) manufactured by OUCHI SHINKO CHEMICAL INDUSTRIAL CO., LTD.
Sulfur: HK-200-5 (powdery sulfur containing 5% by mass of oil) manufactured by Hosoi Chemical Industry Co., Ltd.
Vulcanization accelerator (1): NOCCELER CZ (N-cyclohexyl-2-benzothiazolylsulfenamide) manufactured by OUCHI

SHINKO CHEMICAL INDUSTRIAL CO., LTD.
Vulcanization accelerator (2): NOCCELER D (1,3-diphenylguanidine) manufactured by OUCHI SHINKO CHEMICAL INDUSTRIAL CO., LTD.
Vulcanization accelerator (3): NOCCELER M (2-mercaptobenzothiazole) manufactured by OUCHI SHINKO CHEMICAL INDUSTRIAL CO., LTD.

(Examples and comparative examples)

In accordance with a blending formula indicated in Table 1, the chemicals other than the sulfur and the vulcanization accelerator were kneaded for five minutes by using a 1.7 L Banbury mixer manufactured by Kobe Steel, Ltd. under the condition that the temperature was set to 150°C, to obtain a kneaded product. Subsequently, the sulfur and the vulcanization accelerator were added to the obtained kneaded product, and kneading by using an open roll was performed for 5 minutes at 100°C, to obtain unvulcanized rubber composition. The obtained unvulcanized rubber composition was press-vulcanized at 170°C for 20 minutes, to obtain vulcanized rubber composition (vulcanized rubber sheet).
The following evaluation was performed by using the obtained vulcanized rubber composition.

(LAT abrasion test)

A LAT tester (Laboratory Abrasion and Skid Tester) was used to measure a volume loss of each vulcanized rubber composition under the condition that a load was 40N, a speed was 20 km/h, and a slip angle was 5°. A LAT abrasion index was calculated according to the following equation with the volume loss of comparative example 3 being 100. The greater the index is, the better wear resistance is.

$$\text{(Wear resistance index)} = \text{(volume loss of comparative example 3)}/\text{(volume loss in each blending)} \times 100$$

(Fuel economy performance)

A viscoelasticity spectrometer manufactured by Iwamoto Seisakusho was used to measure a loss tangent (tanδ) of the vulcanized rubber sheet under the condition that the temperature was 50°C, the initial strain was 10%, the dynamic strain was 2%, and the frequency was 10 Hz. A fuel economy index was calculated according to the following equation with the tanδ of comparative example 3 being 100. The greater the fuel economy index is, the better fuel economy performance is.

$$\text{(Fuel economy index)} = (\tan\delta \text{ of comparative example 3})/(\tan\delta \text{ in each blending}) \times 100$$

[Table 1]

| | | Comp. Ex. 1 | Comp. Ex. 2 | Comp. Ex. 3 | Comp. Ex. 4 | Ex. 1 | Ex. 2 | Comp. Ex. 5 | Ex. 3 | Ex. 4 | Comp. Ex. 6 |
|---|---|---|---|---|---|---|---|---|---|---|---|
| Blended amount (Parts by mass) | NR | | | | | 15 | | | | | |
| | SBR (1-1) (Mw1200000) | 20 | 85 | 20 | 85 | 30 | 20 | | 20 | | 20 |
| | SBR (1-2) (Mw1500000) | | | | | | | | | 20 | |
| | SBR (1-3) (Mw800000) | | | | | | | 20 | | | |
| | SBR (1-4) (Mw1200000) | | | | | | | | | | |
| | SBR (1-5) (Mw1200000) | | | | | | | | | | |
| | SBR (2-1) (Mw350000) | 65 | | 65 | | 40 | 65 | 60 | 60 | 60 | |
| | SBR (2-2) (Mw80000) | | | | | | | | | | 60 |
| | SBR (2-3) (Mw150000) | | | | | | | | | | |
| | SBR (2-4) (Mw450000) | | | | | | | | | | |
| | SBR (2-5) (Mw350000) | | | | | | | | | | |
| | SBR (2-6) (Mw350000) | | | | | | | | | | |
| | BR (1) (Mw530000) | 15 | 15 | 15 | 15 | 15 | 15 | 20 | 20 | 20 | 20 |
| | BR (2) (Mw300000) | | | | | | | | | | |
| | BR (3) (Mw900000) | | | | | | | | | | |
| | BR (4) (Mw1200000) | | | | | | | | | | |
| | BR (5) (Mw530000) | | | | | | | | | | |
| | Carbon black | 5 | 5 | 5 | 5 | 5 | 5 | 5 | 5 | 5 | 5 |
| | Silica | 60 | 60 | 60 | 60 | 60 | 60 | 60 | 60 | 60 | 60 |
| | Stearic acid | 2 | 2 | 2 | 2 | 2 | 2 | 2 | 2 | 2 | 2 |
| | Wax | 1.5 | 1.5 | 1.5 | 1.5 | 1.5 | 1.5 | 1.5 | 1.5 | 1.5 | 1.5 |
| | Oil | 20 | 20 | 20 | 20 | 10 | 20 | 20 | 20 | 20 | 20 |
| | Silane coupling agent (1) | | 5 | 5 | 5 | 5 | 5 | 5 | 5 | 5 | 5 |
| | Silane coupling agent (2) | 5 | | | | | | | | | |
| | Zinc oxide | 2 | 2 | 2 | 2 | 2 | 2 | 2 | 2 | 2 | 2 |
| | Anti-aging agent (1) | 2 | 2 | 2 | 2 | 2 | 2 | 2 | 2 | 2 | 2 |
| | Anti-aging agent (2) | 1 | 1 | 1 | 1 | 1 | 1 | 1 | 1 | 1 | 1 |
| | Sulfur | 1.3 | 1.3 | 1.3 | 1.3 | 1.4 | 1.3 | 1.3 | 1.3 | 1.3 | 1.3 |
| | Vulcanization accelerator (1) | 2.2 | 2.2 | 2.2 | 2.2 | 2.2 | 2.2 | 2.2 | 2.2 | 2.2 | 2.2 |
| | Vulcanization accelerator (2) | 1.7 | 1.7 | 2 | 2 | 1.7 | 1.7 | 1.7 | 1.7 | 1.7 | 1.7 |
| | Vulcanization accelerator (3) | 0.3 | 0.3 | | | 0.3 | 0.3 | 0.3 | 0.3 | 0.3 | 0.3 |
| Evaluation result | Wear resistance | 100 | 121 | 100 | 118 | 111 | 116 | 110 | 121 | 125 | 113 |
| | Fuel economy performance | 94 | 42 | 100 | 42 | 103 | 105 | 100 | 105 | 108 | 96 |

| | | Ex. 5 | Comp. Ex. 7 | Comp. Ex. 8 | Ex. 6 | Comp. Ex. 9 | Ex. 7 | Ex. 8 | Ex. 9 | Ex. 10 | Ex. 11 |
|---|---|---|---|---|---|---|---|---|---|---|---|
| Blended amount (Parts by mass) | NR | | | | | | | | | | |
| | SBR (1-1) (Mw1200000) | 20 | 20 | 20 | 20 | 20 | | | 20 | 20 | 20 |
| | SBR (1-2) (Mw1500000) | | | | | | | | | | |
| | SBR (1-3) (Mw800000) | | | | | | | | | | |
| | SBR (1-4) (Mw1200000) | | | | | | 20 | | | | |
| | SBR (1-5) (Mw1200000) | | | | | | | 20 | | | |
| | SBR (2-1) (Mw350000) | | | 60 | 60 | 60 | 60 | 60 | | | 60 |
| | SBR (2-2) (Mw80000) | | | | | | | | | | |
| | SBR (2-3) (Mw150000) | 60 | | | | | | | | | |
| | SBR (2-4) (Mw450000) | | 60 | | | | | | | | |
| | SBR (2-5) (Mw350000) | | | | | | | | 60 | | |
| | SBR (2-6) (Mw350000) | | | | | | | | | 60 | |
| | BR (1) (Mw530000) | 20 | 20 | | | | 20 | 20 | 20 | 20 | |
| | BR (2) (Mw300000) | | | 20 | | | | | | | |
| | BR (3) (Mw900000) | | | | 20 | | | | | | |
| | BR (4) (Mw1200000) | | | | | 20 | | | | | |
| | BR (5) (Mw530000) | | | | | | | | | | 20 |
| | Carbon black | 5 | 5 | 5 | 5 | 5 | 5 | 5 | 5 | 5 | 5 |
| | Silica | 60 | 60 | 60 | 60 | 60 | 60 | 60 | 60 | 60 | 60 |
| | Stearic acid | 2 | 2 | 2 | 2 | 2 | 2 | 2 | 2 | 2 | 2 |
| | Wax | 1.5 | 1.5 | 1.5 | 1.5 | 1.5 | 1.5 | 1.5 | 1.5 | 1.5 | 1.5 |
| | Oil | 20 | 20 | 20 | 20 | 20 | 20 | 20 | 20 | 20 | 20 |
| | Silane coupling agent (1) | 5 | 5 | 5 | 5 | 5 | 5 | 5 | 5 | 5 | 5 |
| | Silane coupling agent (2) | | | | | | | | | | |
| | Zinc oxide | 2 | 2 | 2 | 2 | 2 | 2 | 2 | 2 | 2 | 2 |
| | Anti-aging agent (1) | 2 | 2 | 2 | 2 | 2 | 2 | 2 | 2 | 2 | 2 |
| | Anti-aging agent (2) | 1 | 1 | 1 | 1 | 1 | 1 | 1 | 1 | 1 | 1 |
| | Sulfur | 1.3 | 1.3 | 1.3 | 1.3 | 1.3 | 1.3 | 1.3 | 1.3 | 1.3 | 1.3 |
| | Vulcanization accelerator (1) | 2.2 | 2.2 | 2.2 | 2.2 | 2.2 | 2.2 | 2.2 | 2.2 | 2.2 | 2.2 |
| | Vulcanization accelerator (2) | 1.7 | 1.7 | 1.7 | 1.7 | 1.7 | 1.7 | 1.7 | 1.7 | 1.7 | 1.7 |
| | Vulcanization accelerator (3) | 0.3 | 0.3 | 0.3 | 0.3 | 0.3 | 0.3 | 0.3 | 0.3 | 0.3 | 0.3 |
| Evaluation result | Wear resistance | 117 | 112 | 110 | 130 | 116 | 113 | 116 | 120 | 118 | 112 |
| | Fuel economy performance | 101 | 97 | 98 | 108 | 94 | 102 | 101 | 102 | 101 | 105 |

According to Table 1, wear resistance and fuel economy performance were able to be improved in a well-balanced manner in examples in which the rubber component containing: the first styrene butadiene rubber having a

weight-average molecular weight of not less than 1000000; the second styrene butadiene rubber having a weight-average molecular weight of not less than 100000 and not greater than 400000; and the butadiene rubber having a weight-average molecular weight of not less than 400000 and not greater than 1000000, the silica, the mercapto silane coupling agent, the sulfenamide-based vulcanization accelerator, the guanidine-based vulcanization accelerator, and the thiazole-based vulcanization accelerator, were contained.

Comparison between comparative examples 2, 3, 4, and example 2 indicates that wear resistance and fuel economy performance were able to be synergistically improved by using, in combination, the rubber component containing: the first styrene butadiene rubber having a weight-average molecular weight of not less than 1000000; the second styrene butadiene rubber having a weight-average molecular weight of not less than 100000 and not greater than 400000; and the butadiene rubber having a weight-average molecular weight of not less than 400000 and not greater than 1000000, and vulcanization accelerator containing the sulfenamide-based vulcanization accelerator, the guanidine-based vulcanization accelerator, and the thiazole-based vulcanization accelerator.

## Claims

**1.** A rubber composition for a tire, the rubber composition comprising:

a rubber component that contains a first styrene butadiene rubber having a weight-average molecular weight of not less than 1000000, a second styrene butadiene rubber having a weight-average molecular weight of not less than 100000 and not greater than 400000, and a butadiene rubber having a weight-average molecular weight of not less than 400000 and not greater than 1000000;
a silica;
a mercapto silane coupling agent;
a sulfenamide-based vulcanization accelerator;
a guanidine-based vulcanization accelerator; and
a thiazole-based vulcanization accelerator.

**2.** The rubber composition, for a tire, according to claim 1, wherein the second styrene butadiene rubber has a vinyl content of not less than 50% by mass.

**3.** The rubber composition, for a tire, according to claim 1 or 2, wherein the second styrene butadiene rubber has a styrene content of not greater than 30% by mass.

**4.** The rubber composition, for a tire, according to any one of claims 1 to 3, wherein the butadiene rubber has a cis content of not less than 95% by mass.

**5.** The rubber composition, for a tire, according to any one of claims 1 to 4, wherein the mercapto silane coupling agent is a silane coupling agent having a mercapto group and/or a silane coupling agent having a carbonylthio group.

**6.** A pneumatic tire having a tire member produced by using the rubber composition according to any one of claims 1 to 5.

## Patentansprüche

**1.** Kautschukzusammensetzung für einen Reifen, wobei die Kautschukzusammensetzung umfasst:

eine Kautschukkomponente, die einen ersten Styrol-Butadien-Kautschuk mit einem gewichtsmittleren Molekulargewicht von nicht weniger als 1000000, einen zweiten Styrol-Butadien-Kautschuk mit einem gewichtsmittleren Molekulargewicht von nicht weniger als 100000 und nicht mehr als 400000, und einen Butadienkautschuk mit einem gewichtsmittleren Molekulargewicht von nicht weniger als 400000 und nicht mehr als 1000000;
ein Siliciumdioxid;
ein Mercaptosilan-Kopplungsmittel;
einen Sulfenamid-basierten Vulkanisationsbeschleuniger;
einen Guanidin-basierten Vulkanisationsbeschleuniger; und
einen Thiazol-basierten Vulkanisationsbeschleuniger.

**2.** Kautschukzusammensetzung für einen Reifen nach Anspruch 1, wobei der zweite Styrol-Butadien-Kautschuk einen

Vinylgehalt von nicht weniger als 50 Massenprozent aufweist.

3. Kautschukzusammensetzung für einen Reifen nach Anspruch 1 oder 2, wobei der zweite Styrol-Butadien-Kautschuk einen Styrolgehalt von nicht mehr als 30 Massenprozent aufweist.

4. Kautschukzusammensetzung für einen Reifen nach einem der Ansprüche 1 bis 3, wobei der Butadienkautschuk einen cis-Gehalt von nicht weniger als 95 Massenprozent aufweist.

5. Kautschukzusammensetzung für einen Reifen nach einem der Ansprüche 1 bis 4, wobei das Mercaptosilan-Kopplungsmittel ein Silan-Kopplungsmittel mit einer Mercaptogruppe und/oder ein Silan-Kopplungsmittel mit einer Carbonylthiogruppe ist.

6. Luftreifen, der ein unter Verwendung der Kautschukzusammensetzung nach einem der Ansprüche 1 bis 5 hergestelltes Reifenteil aufweist.

**Revendications**

1. Composition de caoutchouc pour pneumatique, la composition de caoutchouc comprenant :

   un composant de caoutchouc qui contient un premier caoutchouc de styrène butadiène ayant un poids moléculaire moyen en poids de pas moins de 1 000 000, un second caoutchouc de styrène butadiène ayant un poids moléculaire moyen en poids de pas moins de 100 000 et de pas plus de 400 000, et un caoutchouc de butadiène ayant un poids moléculaire moyen en poids de pas moins de 400 000 et de pas plus de 1 000 000 ;
   une silice ;
   un agent de couplage de silane mercapto ;
   un accélérateur de vulcanisation à base de sulfénamide ;
   un accélérateur de vulcanisation à base de guanidine ; et
   un accélérateur de vulcanisation à base de thiazole.

2. Composition de caoutchouc, pour un pneumatique, selon la revendication 1, dans laquelle le second caoutchouc de styrène butadiène a une teneur en vinyle de pas moins de 50 % en masse.

3. Composition de caoutchouc, pour un pneumatique, selon la revendication 1 ou 2, dans laquelle le second caoutchouc de styrène butadiène a une teneur en styrène de pas plus de 30 % en masse.

4. Composition de caoutchouc, pour un pneumatique, selon l'une quelconque des revendications 1 à 3, dans laquelle le caoutchouc de butadiène a une teneur en cis de pas moins de 95 % en masse.

5. Composition de caoutchouc, pour un pneumatique, selon l'une quelconque des revendications 1 à 4, dans laquelle l'agent de couplage de silane mercapto est un agent de couplage de silane ayant un groupe mercapto et/ou un agent de couplage de silane ayant un groupe carbonylthio.

6. Pneumatique ayant un élément de pneumatique produit en utilisant la composition selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012052128 A
- JP 2008075066 A